# FASCICULE DE BREVET EUROPEEN

(11) **EP 0 832 369 B1**
(45) Date de publication et mention de la délivrance du brevet: **08.01.2003**
(21) Numéro de dépôt: 96922093.8
(22) Date de dépôt: 11.06.1996
(51) Int. Cl.: F16D 1/12, B60S 1/34, F02M 39/02

(54) **DISPOSITIF D'ACCOUPLEMENT REGLABLE**
EINSTELLBARE KUPPLUNGSVORRICHTUNG
ADJUSTABLE COUPLING DEVICE

(30) Priorité: 12.06.1995 FR 9506895
(43) Date de publication de la demande: 01.04.1998
(73) Titulaire: Societe de Recherches d'Etudes et de Valorisation, 27180 Claville (FR)
(72) Inventeur: ECKENDORFF, Jean-Pierre, F-27180 Saint-Sebastien-de-Morsent (FR)
(74) Mandataire: CABINET BONNET-THIRION
(86) Numéro de dépôt international: FR9600880
(87) Numéro de publication internationale: WO96041963

(56) Documents cités:
- EP-A- 0 148 794
- EP-A- 0 604 324
- WO-A-89/12179
- DE-C- 900 505
- FR-A- 2 607 564
- FR-A- 2 611 835
- FR-A- 2 689 584
- US-A- 1 903 162
- US-A- 5 090 365
- US-A- 5 141 090

## Description

La présente invention concerne un dispositif d'accouplement d'un cylindre creux à un arbre, destiné à être placé en bout dudit arbre, la position angulaire relative du cylindre et de l'arbre étant réglable.

Un tel dispositif est du genre de celui qui est décrit dans le document EP-A-0148 794. Le dispositif selon ce document donne satisfaction ; toutefois, en général, ce dispositif est monté sur un arbre qui est adapté à le recevoir ; de plus, son montage n'est pas toujours aisé, les éléments qui le constituent devant être montés l'un à la suite de l'autre.

Dans le document WO 89/12179, on a décrit un dispositif d'accouplement à un arbre destiné à être placé en bout dudit arbre, ledit dispositif comportant un cylindre creux destiné à entourer ledit arbre, une bague annulaire entourée par le cylindre creux et déplaçable axialement en étant adaptée à régler, lors de ce déplacement axial, la position angulaire relative entre le cylindre creux et l'arbre, une vis de maintien et une rondelle de maintien étant prévues, centrées sur l'axe de l'arbre, pour assurer, lorsque le dispositif est monté sur l'arbre, le blocage dans leur position angulaire relative réglée du cylindre creux et de l'arbre.

La présente invention a pour but de proposer un dispositif du genre ci-dessus qui soit agencé en sorte de pouvoir être monté en bout d'un arbre existant et qui, de plus, constitue un sous-ensemble montable facilement en bout dudit arbre, à la manière d'une poulie par exemple.

Ainsi, selon l'invention, un sous-ensemble du genre ci-dessus est caractérisé par le fait qu'il comprend également un moyeu destiné à être monté et calé axialement sur ledit arbre, ledit blocage appliquant axialement, au moyen de la vis de maintien, la rondelle de maintien contre la face avant du cylindre creux et le cylindre creux contre le moyeu, des moyens d'assemblage étant prévus pour assembler le dispositif d'accouplement et la rondelle de maintien, au moins avant montage du dispositif d'accouplement sur l'arbre, le dispositif d'accouplement et la rondelle de maintien faisant ainsi partie dudit sous-ensemble, lesquels moyens d'assemblage sont constitués par un étrier.

Avantageusement, les moyens d'assemblage assemblent également la vis de maintien, laquelle fait ainsi partie dudit sous-ensemble.

Avantageusement, l'étrier est axial ; en variante, l'étrier est transversal.

Avantageusement la bague annulaire est munie, d'une part, à sa surface intérieure de cannelures longitudinales lui permettant d'être solidarisée en rotation audit arbre tout en étant déplaçable axialement et, d'autre part, à sa surface extérieure d'au moins une dent à flancs hélicoïdaux, ledit cylindre creux ayant au moins une cannelure creusée à sa surface intérieure et destinée à recevoir ladite au moins une dent de la bague annulaire, les flancs de ladite cannelure étant hélicoïdaux et en correspondance avec les flancs hélicoïdaux de ladite au moins une dent de la bague annulaire.

En variante, la bague annulaire est munie, d'une part, à sa surface intérieure de cannelures hélicoïdales lui permettant d'être solidarisée en rotation audit arbre tout en étant déplaçable axialement et, d'autre part, à sa surface extérieure d'au moins une dent à flancs droits ou de pas inversé, ledit cylindre creux ayant au moins une cannelure creusée à sa surface intérieure et destinée à recevoir ladite au moins une dent de la bague annulaire, les flancs de ladite cannelure étant droits ou de pas inversé et en correspondance avec les flancs droits ou de pas inversé de ladite au moins une dent de la bague annulaire.

De préférence, pour le déplacement axial de la bague annulaire, une vis annulaire de commande porte un filet hélicoïdal qui coopère avec un filet hélicoïdal ménagé, dans la zone hors cannelure, sur la surface de la pièce, cylindre creux ou moyeu, qui porte la au moins une cannelure, ladite bague annulaire étant attelée en translation à ladite vis annulaire de commande ; une butée transversale limite la course axiale de la vis annulaire ; la vis annulaire est fendue et son filet peut avantageusement être constitué par un seul filet commençant d'un côté de ladite fente et se terminant de l'autre côté ; de préférence, la vis annulaire est freinée en rotation : ceci est obtenu, par exemple, en utilisant une vis annulaire non rigoureusement circulaire au repos mais déformée radialement et montée élastiquement.

De préférence, la rondelle de maintien est légèrement conique à l'état de repos, et plane après serrage.

En variante, la rondelle de maintien est plane à l'état: de repos, et légèrement conique après serrage, la face avant du cylindre creux étant également légèrement conique.

Avantageusement, la rondelle de maintien présente au moins une ouverture pour la mise en oeuvre d'un outil de réglage.

De préférence, pour augmenter le couple d'entraînement transmis par la face d'appui du cylindre creux au moyeu, les surfaces en contact des pièces sont enduites d'une matière de frottement ; en variante, un disque frein est interposé entre les pièces.

Selon une application de l'invention, le cylindre creux est porté par l'entraîneur d'un bras d'essuie-glace.

L'invention a également pour objet un arbre équipé en bout d'un dispositif d'accouplement faisant partie d'un sous-ensemble tel que ci-dessus, le moyeu du dispositif d'accouplement étant calé en rotation par rapport à l'arbre dans une position angulaire prédéterminée ; le calage axial du moyeu est réalisé par une portée de l'arbre munie de cannelures qui prolongent les cannelures de l'arbre et qui coopèrent avec des cannelures correspondantes du moyeu prolongeant de la même façon ses cannelures.

L'invention a également pour objet un bras d'essuie-glace comportant un entraîneur par lequel il est accouplé à un arbre, en bout de celui-ci, ledit entraîneur étant porté par le cylindre creux d'un sous-ensemble tel que ci-dessus.

Les caractéristiques et avantages de l'invention ressortiront d'ailleurs mieux à la lecture de la description qui va suivre, en référence aux dessins annexés dans lesquels :
- la figure 1 est une coupe axiale d'un dispositif selon l'invention monté en bout d'arbre avant réglage et équipé d'un étrier de montage ;
- la figure 2 est une vue partielle en coupe transversale selon la ligne II-II de la figure 1 ;
- la figure 3 est une vue en coupe axiale du dispositif de la figure 1, après réglage ;
- la figure 4 est une vue en perspective d'une clé de réglage pour le réglage du dispositif selon les figures 1 à 3 ;
- la figure 5 est une vue en coupe du dispositif des figures 1 à 3, à plus petite échelle, pré-assemblé autrement ;
- la figure 6 est une vue en coupe partielle du dispositif des figures 1 à 3, à plus petite échelle, pré-assemblé encore autrement ;
- la figure 7 est une vue en coupe selon VII-VII de la figure 6.

Dans le cas d'un essuie-glace de véhicule automobile, on sait que le balai d'essuie-glace est porté par un bras d'essuie-glace animé d'un mouvement alternatif ; plus précisément, le bras est monté articulé sur un entraîneur solidarisé à l'extrémité d'un arbre d'entraînement, un ressort placé entre le bras et l'entraîneur appliquant le balai sur le pare-brise ; pour la solidarisation de l'entraîneur sur l'arbre d'entraînement, celui-ci présente une portion striée, généralement conique, prolongée par une extrémité d'arbre filetée ; la portion striée reçoit l'entraîneur, grâce à un alésage correspondant que comporte l'entraîneur, et un écrou est vissé sur l'extrémité filetée de l'arbre ; après serrage de l'écrou, les stries de la portion striée s'incrustent dans l'entraîneur en assurant ainsi la solidarisation en rotation de l'entraîneur et de l'arbre d'entraînement.

Comme on le sait, la position angulaire de l'entraîneur par rapport à l'arbre d'entraînement détermine, en fonctionnement, la coursé de balayage du balai sur le pare-brise ; l'entraîneur doit donc être correctement positionné ; ce positionnement n'est pas aisé à réaliser ; en outre, s'il n'a pas été bien réalisé du premier coup, il est rendu encore plus difficile par la suite, compte tenu du marquage de l'alésage de l'entraîneur par les stries de l'arbre d'entraînement.

Le dispositif d'accouplement selon l'invention permet de pallier ces inconvénients.

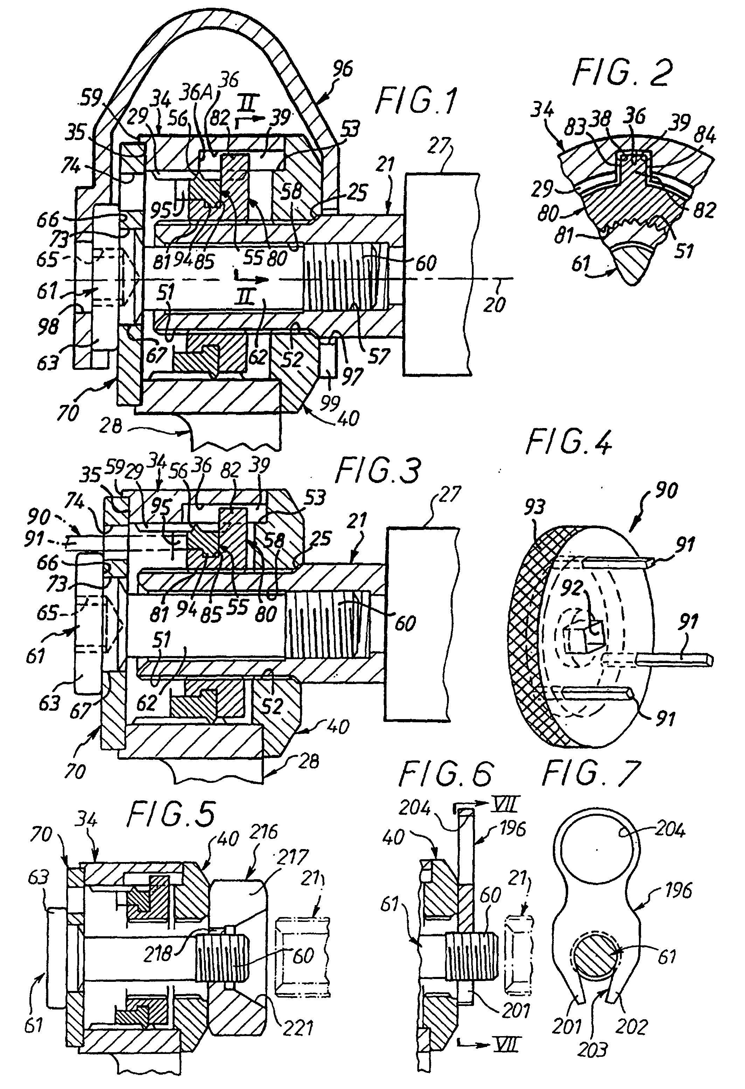

En se reportant aux figures 1 à 3, l'extrémité d'un arbre d'entraînement 21 sortant d'un coussinet 27 et animée d'un mouvement de rotation alternatif est destinée à entraîner dans ce mouvement de rotation alternatif un entraîneur 28 sur lequel est monté articulé un bras d'essuie-glace non représenté.

L'entraîneur 28 comprend un cylindre creux 34 ; on entend ici par cylindre creux une sorte de manchon ou fourreau ; une extrémité axiale du cylindre creux 34 est en appui axial contre un moyeu 40 en étant centrée par une portée annulaire 53 que présente le moyeu 40, engagé sur l'arbre 21 jusqu'à venir buter axialement contre une portée 25, par exemple conique, que présente l'arbre 21 ; entre la portée 25 et le bout de l'arbre 21, dans la paroi extérieure de celui-ci sont ménagées des cannelures longitudinales 51 ; l'alésage intérieur par lequel le moyeu 40 est monté sur l'extrémité de l'arbre 21 est muni de cannelures 52 longitudinales coopérant avec des cannelures longitudinales 51 ménagées à la surface extérieure de l'extrémité dudit arbre centrant le moyeu 40 qui lui-même centre le cylindre creux 34 grâce à sa portée 53.

Avantageusement, et tel que cela est représenté, la portée 25 de l'arbre 21 est munie de cannelures qui prolongent les cannelures 51 et qui coopèrent avec des cannelures correspondantes du moyeu 40 prolongeant de la même façon ses cannelures 52.

Le bout de l'arbre 21 est creux ; il est muni d'un taraudage 57 qui débouche à l'extérieur par un alésage lisse 58 situé axialement en avant de la portée 25 ; l'alésage lisse 58 est de plus grand diamètre que celui du taraudage 57 et son extrémité de sortie est évasée .

Le taraudage 57 est adapté à recevoir un filetage complémentaire 60 prévu à la périphérie externe de l'extrémité de la queue 62 d'une vis de maintien 61 ayant une tête 63 creusée d'un alésage polygonal 65 pour la manoeuvre de la vis 61.

La tête 63 de la vis 61 est en forme de collerette et est adaptée à coopérer par sa face arrière 66 avec une rondelle de maintien 70 elle-même adaptée à coopérer avec la face avant 35 du cylindre creux 34 ; lorsque la vis 61 est montée serrée dans l'arbre 21, la rondelle de maintien 70 est à distance axiale de l'extrémité de l'arbre 21 de sorte qu'alors le cylindre creux 34 est plaqué sur le moyeu 40 lui-même en appui axial sur l'arbre 21.

Avantageusement, la face avant 35 du cylindre creux 34 est bordée par un rebord annulaire 59 pour centrer la rondelle de maintien 70 par sa périphérie externe ; la rondelle de maintien 70 supporte centrée la vis de maintien 61 qui présente une portée cylindrique 67, de diamètre inférieur à celui de la tête 63 mais plus grand que celui de la queue 62, avec laquelle coopère l'alésage central 73 de la rondelle de maintien 70.

L'espace radial existant entre l'extrémité de l'arbre 21 et le cylindre creux 34 est mis à profit pour réaliser un dispositif de réglage de la position relative angulaire du cylindre creux 34 et de l'arbre 21.

Entre les cannelures longitudinales 51 de l'arbre 21 sont intercalées des cannelures longitudinales 81 correspondantes ménagées à la surface intérieure d'une bague annulaire 80 qui, à sa périphérie extérieure, porte des dents 82 à flancs hélicoïdaux 83, 84 de grand pas destinés à coopérer avec des flancs hélicoïdaux correspondants, respectivement 38, 39, de cannelures 36 ménagées à la surface intérieure du cylindre creux 34.

Les portions de surface intérieure du cylindre creux 34 comprises entre les cannelures 36 portent un filet hélicoïdal 29 de faible pas avec lequel coopère le filet extérieur correspondant 56 d'une vis annulaire de commande 55 attelée en translation à la bague 80 grâce à un talon 94 qu'elle présente et qui est logé dans une gorge 85 annulaire de la bague 80.

Dans la forme de réalisation représentée, la gorge 85 est taillée annulairement ; elle pourrait, bien entendu, pour par exemple faciliter l'obtention par moulage de la bague 80, être matérialisée par des butées transversales, avant et arrière, décalées successivement circonférentiellement.

D'après la description qui précède, on comprend que le déplacement angulaire de l'entraîneur 28 par rapport à l'arbre 21 est obtenu en faisant tourner la vis annulaire de commande 55 ; pour ce faire, celle-ci présente frontalement une (ou plusieurs) encoche(s) radiale(s) 95, par exemple trois encoches radiales 95 à 120 degrés, destinées à recevoir l'extrémité de pieds de réglage 91 d'une clé de réglage 90, visible sur la figure 4, constituée d'un disque 93 auquel les pieds 91 sont perpendiculaires et qui comporte en son centre un trou carré 92 destiné à recevoir l'embout carré d'un outil de manoeuvre si nécessaire ; comme cela est visible en traits mixtes sur la figure 3, le bon positionnement de la clé 90, en particulier de l'extrémité des pieds 91 dans les encoches 95, est facilité par le fait que la tête 63 de la vis 61 a une surface cylindrique périphérique dont le diamètre est tel qu'elle s'inscrit parfaitement dans le volume embrassé par les pieds de réglage 91 et que lorsque ceux-ci sont placés au droit de la tête 63 parallèlement à son axe ils sont radialement au droit des encoches 95 ; bien entendu, la rondelle de maintien 70 présente des ouvertures 74 à 120 degrés pour le passage des pieds de réglage 91.

Pour faciliter le montage de l'entraîneur 28 sur l'arbre 21, la bague annulaire 80 et sa vis annulaire de commande 55 ayant été installées à l'intérieur du cylindre creux 34, la bague 80 étant en position axiale moyenne par rapport aux cannelures 36, comme montré figure 1, le moyeu 40, la rondelle 70 et la vis 61 sont mis en place et maintenus par un étrier 96 axial élastique, par exemple en matière plastique, sollicitant l'un vers l'autre axialement le moyeu 40 et la tête 63 de la vis 60 sur lesquels il prend appui ; la tête 63 le positionne transversalement selon deux plans perpendiculaires. Un passage 97 dans l'étrier 96 permet d'enfiler l'ensemble ainsi constitué sur l'arbre 21. On dispose ainsi d'un ensemble prêt à être monté sur l'arbre 21, le filetage 60 apparaissant à l'extérieur de l'étrier 96 et servant de pilote pour le montage de l'ensemble sur l'arbre 21.

Pour ce faire, par pivotement de l'entraîneur 28 il est aisé d'enfiler les cannelures 52 du moyeu 40 sur celles 51 de l'arbre 21 ; puis, après avoir orienté le bras porte-balai, donc l'entraîneur 28, au plus près de sa position de fin de course prévue sur le pare-brise, on pousse l'ensemble vers la droite, par rapport à la figure 1, et on serre la vis de maintien 61 en passant l'outil de serrage à travers un passage 98 que présente l'étrier 96 ; on redesserre ensuite la vis 61, par exemple d'un quart de tour, pour libérer la rondelle de maintien 70.

L'étrier 96 est déposé : une fente 99 débouchant dans le passage 97 permet cette dépose ; avantageusement, la fente 99 a une largeur inférieure au diamètre de l'arbre 21 pour éviter sa chute accidentelle.

Pour effectuer le réglage précis de la position de l'entraîneur 28 par rapport à l'arbre 21, on peut, pour faciliter ce réglage, faire en sorte que, lors du réglage, l'entraîneur 28 tourne dans le même sens que celui dans lequel la clé de réglage 90 est tournée ; pour cela, il suffit que le pas des flancs hélicoïdaux 38,39 - 83,84 pour la bague 80 soit de sens contraire de celui des filets 29-56 pour la vis annulaire 55.

La vis 61 est ensuite serrée ; la rondelle 70 présente, une certaine élasticité ; elle peut être légèrement conique à l'état de repos et plane après serrage ; dans ce cas, la portée 35 est plane ; bien entendu, l'inverse est également possible, la portée 35 étant alors conique selon un angle qui correspond à celui de la rondelle 70 déformée après serrage.

Par mesure de sécurité, afin d'éviter que lors du réglage la vis annulaire 55 ne vienne en avant au delà de la face 35 du cylindre creux 34, une butée transversale 36A limite la course axiale de la vis annulaire 55 ; selon la forme de réalisation montrée sur les figures, la butée 36A est le fond axial des cannelures 36 prévues sous forme de cannelures borgnes ; en variante, la butée 36A est supprimée et c'est le filet 29 lui-même qui assure la fin de course de la vis annulaire 55.

La figure 5 montre le dispositif des figures 1 à 3, à plus petite échelle, pré-assemblé autrement ; ici, l'étrier 96 est remplacé par un écrou sécable 216, par exemple en matière plastique, monté sur le filetage 60 de la vis de maintien 61 ; l'ensemble constitué par la rondelle de maintien 70, le cylindre creux 34 et le moyeu 40 est ainsi maintenu axialement entre la tête 63 de la vis de maintien 61 et l'écrou sécable 216 ; celui-ci comprend des saignées radiales 217, par exemple trois saignées radiales réparties circonférentiellement, ménageant des zones sécables 218 ; l'écrou sécable 216 présente une entrée conique 221 en sorte que lorsque l'ensemble est présenté devant l'arbre 21 et poussé vers celui-ci, l'extrémité dudit arbre 21 casse, ici en trois segments, l'écrou sécable 216 du fait de cette entrée conique 221 ; il suffit alors de visser la vis de maintien 61.

Selon les figures 6 et 7, le pré-assemblage est réalisé par un étrier 196, ici transversal, par exemple en matière plastique, en forme de plaque, comportant deux ailes 201, 202 définissant une échancrure 203 dont le fond est circulaire, de diamètre égal au diamètre en fond de filet du filetage 60 de la vis de maintien 61, et dont l'entrée est de largeur inférieure audit diamètre ; à son extrémité opposée à celle qui présente l'échancrure 203, l'étrier transversal 196 présente un moyen de préhension, ici un anneau 204 ; ainsi, l'ensemble est maintenu axialement entre la tête de la vis de maintien 61 et l'étrier transversal 196 clipsé sur le filetage 60 de ladite vis ; après introduction de l'extrémité du filetage 60 dans l'arbre 21, il suffit de retirer radialement l'étrier transversal 196, grâce à l'anneau 204, et de visser la vis de maintien 61.

Selon une variante non représentée du dispositif selon les figures 1 à 3, la bague annulaire 80 est munie, d'une part, à sa surface intérieure de cannelures hélicoïdales lui permettant d'être solidarisée en rotation audit arbre tout en étant déplaçable axialement et, d'autre part, à sa surface extérieure d'au moins une dent à flancs droits ou de pas inversé, le cylindre creux ayant au moins une cannelure creusée à sa surface intérieure et destinée à recevoir ladite au moins une dent de la bague annulaire, les flancs de ladite cannelure étant droits ou de pas inversé et en correspondance avec les flancs droits ou de pas inversé de ladite au moins une dent de la bague annulaire.

## Revendications

1. Sous-ensemble comprenant un dispositif d'accouplement à un arbre (21) destiné à être placé en bout dudit arbre (21), ledit dispositif comportant un cylindre creux (34) destiné à entourer ledit arbre (21), une bague annulaire (80) entourée par le cylindre creux (34) et déplaçable axialement en étant adaptée à régler, lors de ce déplacement axial, la position angulaire relative entre le cylindre creux (34) et l'arbre (21), une vis (61) de maintien et une rondelle de maintien (70) étant prévues, centrées sur l'axe (20) de l'arbre (21), pour assurer, lorsque le dispositif est monté sur l'arbre (21), le blocage dans leur position angulaire relative réglée du cylindre creux (34) et de l'arbre (21), **caractérisé par le fait que** le sous-ensemble comprend également un moyeu (40) destiné à être monté et calé axialement sur ledit arbre (21), ledit blocage appliquant axialement, au moyen de la vis (61) de maintien, la rondelle de maintien (70) contre la face avant (35) du cylindre creux (34) et le cylindre creux (34) contre le moyeu (40), des moyens d'assemblage étant prévus pour assembler le dispositif d'accouplement et la rondelle de maintien (70), au moins avant montage du dispositif d'accouplement sur l'arbre, le dispositif d'accouplement et la rondelle de maintien faisant ainsi partie dudit sous-ensemble, lesquels moyens d'assemblage sont constitués par un étrier (96,196).

2. Sous-ensemble selon la revendication 1, **caractérisé par le fait que** les moyens d'assemblage assemblent également la vis de maintien (61).

3. Sous-ensemble selon l'une des revendications 1 ou 2, **caractérisé par le fait que** l'étrier (96) est axial.

4. Sous-ensemble selon l'une des revendications 1 ou 2, **caractérisé par le fait que** l'étrier (196) est transversal.

5. Sous-ensemble selon l'une des revendications 1 à 4, **caractérisé par le fait que** la bague annulaire (80) est munie, d'une part, à sa surface intérieure de cannelures longitudinales (81) lui permettant d'être solidarisée en rotation audit arbre (21) tout en étant déplaçable axialement et, d'autre part, à sa surface extérieure d'au moins une dent (82) à flancs (83, 84) hélicoïdaux, ledit cylindre creux (34) ayant au moins une cannelure (36) creusée à sa surface intérieure et destinée à recevoir ladite au moins une dent (82) de la bague annulaire (80), les flancs (38,39) de ladite cannelure (36) étant hélicoïdaux et en correspondance avec les flancs (83,84) hélicoïdaux de ladite au moins une dent (82) de la bague annulaire (80).

6. Sous-ensemble selon l'une des revendications 1 à 4, **caractérisé par le fait que** la bague annulaire est munie, d'une part, à sa surface intérieure de cannelures hélicoïdales lui permettant d'être solidarisée en rotation audit arbre tout en étant déplaçable axialement et, d'autre part, à sa surface extérieure d'au moins une dent à flancs droits ou de pas inversé, ledit cylindre creux ayant au moins une cannelure creusée à sa surface intérieure et destinée à recevoir ladite au moins une dent de la bague annulaire, les flancs de ladite cannelure étant droits ou de pas inversé et en correspondance avec les flancs droits ou de pas inversé de ladite au moins une dent de la bague annulaire.

7. Sous-ensemble selon l'une des revendications 1 à 6, **caractérisé par le fait que**, pour le déplacement axial de la bague annulaire (80), une vis annulaire (55) de commande porte un filet (56) hélicoïdal qui coopère avec un filet (29) hélicoïdal ménagé, dans sa zone hors cannelure (36), sur la surface de la pièce, cylindre creux (34) ou moyeu (40), qui porte la au moins une cannelure (36), ladite bague annulaire (80) étant attelée en translation à ladite vis annulaire (55) de commande.

8. Sous-ensemble selon la revendication 7, **caractérisé par le fait qu'**une butée transversale (36A) limite la course axiale de la vis annulaire (55).

9. Sous-ensemble selon l'une des revendications 7 ou 8, **caractérisé par le fait que** la vis annulaire (55) n'est pas rigoureusement circulaire au repos.

10. Sous-ensemble selon l'une des revendications 7 à 9, **caractérisé par le fait que** la vis annulaire (55) est fendue et son filet (56) est un seul filet commençant d'un côté de ladite fente et se terminant de l'autre côté.

11. Sous-ensemble selon l'une des revendications 1 à 10, **caractérisé par le fait que** la rondelle de maintien (70) est légèrement conique à l'état de repos, et plane après serrage.

12. Sous-ensemble selon l'une des revendications 1 à 10, **caractérisé par le fait que** la rondelle de maintien (70) est plane à l'état de repos, et légèrement conique après serrage, la face avant (35) du cylindre creux (34) étant légèrement conique.

13. Sous-ensemble selon l'une des revendications 1 à 12, **caractérisé par le fait que** la rondelle de maintien (70) présente au moins une ouverture (74) pour la mise en oeuvre d'un outil de réglage (90).

14. Sous-ensemble selon l'une des revendications 1 à 13, **caractérisé par le fait que**, pour augmenter le couple d'entraînement transmis par la face d'appui du cylindre creux (34) au moyeu (40), les surfaces en contact des pièces sont traitées de manière à augmenter le frottement.

15. Arbre et sous-ensemble, l'arbre étant équipé en bout d'un dispositif d'accouplement faisant partie dudit sous-ensemble, **caractérisé par le fait que** le sous-ensemble est selon l'une des revendications 1 à 14, le moyeu (40) du dispositif d'accouplement étant calé en rotation par rapport à l'arbre (21) dans une position angulaire prédéterminée.

16. Arbre et sous-ensemble selon la revendication 15, **caractérisé par le fait que** le calage axial du moyeu (40) est réalisé par une portée (25) de l'arbre (21) munie de cannelures qui prolongent les cannelures (51) de l'arbre (21) et qui coopèrent avec des cannelures correspondantes du moyeu (40) prolongeant de la même façon ses cannelures (52).

17. Arbre et sous-ensemble selon l'une des revendications 15 ou 16, **caractérisé par le fait que** le sous-ensemble est un entraîneur (28) de bras d'essuie-glace, lequel entraîneur comprend le cylindre creux (34).

## Claims

1. A sub-assembly comprising a device for coupling to a shaft (21) adapted to be placed at the end of said shaft (21), said device comprising a hollow cylinder (34) adapted to surround said shaft (21), an annular ring (80) surrounded by the hollow cylinder (34) and movable axially while being adapted, during said axial movement to adjust the relative angular position of the hollow cylinder (34) and the shaft (21), a retaining screw (61) and a retaining washer (70) being provided, centered on the axis (20) of the shaft (21), to ensure, when the device is mounted on the shaft (21), the locking in the adjusted relative angular position of the hollow cylinder (34) and the shaft (21), **characterized in that** the sub-assembly further comprises a hub (40) adapted to be mounted and locked axially on said shaft (21), said locking axially applying, by means of the retaining screw (61), the retaining washer (70) against the front face (35) of the hollow cylinder (34) and the hollow cylinder (34) against the hub (40), means for assembly being provided to assemble the coupling device and retaining washer (70), at least before mounting of the coupling device on the shaft, the coupling device and the retaining washer thus forming part of said sub-assembly, said means for assembly being constituted by a bracket (96, 196).

2. A sub-assembly according to claim 1, **characterized in that** the means for assembly also assemble the retaining screw (61).

3. A sub-assembly according to one of claims 1 or 2, **characterized in that** the bracket (96) is axial.

4. A sub-assembly according to one of claims 1 or 2, **characterized in that** the bracket (196) is transversal.

5. A sub-assembly according to one of claims 1 to 4, **characterized in that** the annular ring (80) has longitudinal splines (81) on its inside surface whereby it can be constrained to rotate with said shaft (21) whilst being movable axially and at least one tooth (82) with helical flanks (83, 84) on its outside surface, said hollow cylinder (34) having at least one spline (36) recessed into its inside surface and adapted to receive said at least one tooth (82) of the annular ring (80), the flanks (38, 39) of said spline (36) being helical and in corresponding relationship with the helical flanks (83, 84) of said at least one tooth (82) of the annular ring (80).

6. A sub-assembly according to any one of claims 1 to 4, **characterized in that** the annular ring has helical splines on its inside surface whereby it can be constrained to rotate with said shaft whilst being movable axially and at least one tooth with straight or reverse pitch flanks on its outside surface, said hollow cylinder having at least one spline recessed into its inside surface adapted to receive said at least one tooth of the annular ring, the flanks of said spline being straight or of reverse pitch and in corresponding relationship with the straight or reverse pitch flanks of said at least one tooth of the annular ring.

7. A sub-assembly according to any one of claims 1 to 6, **characterized in that**, for the axial displacement of the annular ring (80), an annular drive screw (55) carries a helical thread (56) which cooperates with a helical thread (29) on the portion of the surface of the part without splines (36), hollow cylinder (34) or hub (40) that carries the at least one spline (36), said annular ring (80) being coupled in translation to said annular drive screw (55).

8. A sub-assembly according to claim 7, **characterized in that** a transverse abutment (36A) limits the axial travel of the annular screw (55).

9. A sub-assembly according to claim 7 or 8, **characterized in that** the annular screw (55) is not strictly circular when at rest.

10. A sub-assembly according to any one of claims 7 to 9 **characterized in that** the annular screw (55) is slit and its thread (56) is a single thread starting from one side of said slit and ending at the other side.

11. A sub-assembly according to anyone of claims 1 to 10 **characterized in that** the retaining washer (70) is slightly conical when at rest and plane after clamping.

12. A sub-assembly according to any one of claims 1 to 10, **characterized in that** the retaining washer (70) is plane when at rest and slightly conical after clamping, the front face (35) of the hollow cylinder (34) being slightly conical.

13. A sub-assembly according to any one of claims 1 to 12, **characterized in that** the retaining washer (70) has at least one opening (74) for an adjuster tool (90).

14. A sub-assembly according to one of claims 1 to 13, **characterized in that**, to increase the drive couple transmitted by the bearing face of the hollow cylinder (34) to the hub (40), the surfaces in contact of the parts are treated so as to increase the friction.

15. A shaft and sub-assembly, the shaft being provided at its end with a coupling device forming part of said sub-assembly, **characterized in that** the sub-assembly is in accordance with one of claims 1 to 14, the hub (40) of a coupling device being locked in rotation with respect to the shaft (21) in a predetermined angular position.

16. A shaft and sub-assembly according to claim 15, **characterized in that** the axial locking of the hub (40) is obtained by means of a bearing surface (25) on the shaft (21) having splines that extend the splines (51) of the shaft (21) and that cooperate with corresponding splines of the hub (40) likewise extending its splines (52).

17. A shaft and sub-assembly according to one of claims 15 or 16, **characterized in that** the sub-assembly is a drive unit (28) of a windshield wiper arm, said drive unit comprising the hollow cylinder (34).

## Patentansprüche

1. Untereinheit, umfassend eine Kupplungsvorrichtung zum Ankuppeln an eine Welle (21), die dazu bestimmt ist, am Ende dieser Welle (21) angeordnet zu werden, wobei diese Vorrichtung einen Hohlzylinder (34) aufweist, der dazu bestimmt ist, die Welle (21) zu umgeben, einen Ring (80), der von dem Hohlzylinder (34) umgeben ist und axial beweglich ist, indem er dafür ausgelegt ist, bei dieser axialen Bewegung die Relativwinkelstellung zwischen dem Hohlzylinder (34) und der Welle (21) einzustellen, wobei eine Halteschraube (61) und eine Haltescheibe (70), die auf die Achse (20) der Welle (21) zentriert sind, vorgesehen sind, um, wenn die Vorrichtung auf der Welle (21) montiert ist, die Blockierung des Hohlzylinders (34) und der Welle (21) in ihrer eingestellten Relativwinkelstellung zu gewährleisten, **dadurch gekennzeichnet, daß** die Untereinheit ferner eine Nabe (40) aufweist, die dazu bestimmt ist, auf der Welle (21) montiert und axial blockiert zu werden, wobei diese Blockierung axial mit Hilfe der Halteschraube (61) die Haltescheibe (70) an die Vorderseite (35) des Hohlzylinders (34) und den Hohlzylinder (34) an die Nabe (40) andrückt, wobei Verbindungsmittel vorgesehen sind, um die Kupplungsvorrichtung und die Haltescheibe (70) mindestens vor der Montage der Kupplungsvorrichtung an der Welle zu verbinden, so daß die Kupplungsvorrichtung und die Haltescheibe Teil der Untereinheit bilden, wobei diese Verbindungsmittel aus einem Bügel (96, 196) bestehen.

2. Untereinheit nach Anspruch 1, **dadurch gekennzeichnet, daß** die Verbindungsmittel auch die Halteschraube (61) verbinden.

3. Untereinheit nach einem der Ansprüche 1 oder 2, **dadurch gekennzeichnet, daß** der Bügel (96) axial ist.

4. Untereinheit nach einem der Ansprüche 1 oder 2, **dadurch gekennzeichnet, daß** der Bügel (196) sich quer erstreckt.

5. Untereinheit nach einem der Ansprüche 1 bis 4, **dadurch gekennzeichnet, daß** der Ring (80) einerseits an seiner Innenfläche mit Längsnuten (81), die es ihm gestatten, bezüglich Drehung mit der Welle (21) fest verbunden zu sein, wobei er gleichzeitig axial beweglich ist, und andererseits an seiner Außenfläche mit mindestens einem Zahn (82) mit schraubenförmigen Flanken (83, 84) versehen ist, wobei der Hohlzylinder (34) mindestens eine auf seiner Innenfläche ausgesparte Nut (36) aufweist, die dazu bestimmt ist, diesen mindestens einen Zahn (82) des Rings (80) aufzunehmen, wobei die Flanken (38, 39) der Nut (36) schraubenförmig und in Entsprechung mit den schraubenförmigen Flanken (83, 84) dieses mindestens einen Zahns (82) des Rings (80) sind.

6. Untereinheit nach einem der Ansprüche 1 bis 4, **dadurch gekennzeichnet, daß** der Ring einerseits an seiner Innenfläche mit schraubenförmigen Nuten versehen ist, die es ihm gestatten, bezüglich Drehung mit der Welle fest verbunden zu sein, wobei er gleichzeitig axial beweglich ist, und andererseits an seiner Außenfläche mit mindestens einem Zahn mit geraden Flanken oder Flanken mit umgekehrter Steigung versehen ist, wobei der Hohlzylinder mindestens eine auf seiner Innenfläche ausgesparte Nut aufweist, die dazu bestimmt ist, diesen mindestens einen Zahn des Rings aufzunehmen, wobei die Flanken der Nut gerade oder von umgekehrter Steigung und in Entsprechung mit den geraden Flanken oder den Flanken mit umgekehrter Steigung dieses mindestens eines Zahns des Rings sind.

7. Untereinheit nach einem der Ansprüche 1 bis 6, **dadurch gekennzeichnet, daß** für die axiale Bewegung des Rings (80) eine ringförmige Antriebsschraube (55) ein schraubenförmiges Gewinde (56) trägt, das mit einem schraubenförmigen Gewinde (29) zusammenwirkt, das in seiner außerhalb der Nut (36) gelegenen Zone auf der Fläche des Teils, Hohlzylinder (34) oder Nabe (40), vorgesehen ist, das die mindestens eine Nut (36) trägt, wobei der Ring (80) bezüglich Translation mit der ringförmigen Antriebsschraube (55) gekoppelt ist.

8. Untereinheit nach Anspruch 7, **dadurch gekennzeichnet, daß** ein Queranschlag (36A) den axialen Hub der ringförmigen Schraube (55) begrenzt.

9. Untereinheit nach einem der Ansprüche 7 oder 8, **dadurch gekennzeichnet, daß** die ringförmige Schraube (55) im Ruhezustand nicht vollkommmen kreisförmig ist.

10. Untereinheit nach einem der Ansprüche 7 bis 9, **dadurch gekennzeichnet, daß** die ringförmige Schraube (55) geschlitzt ist und ihr Gewinde (56) ein einziges Gewinde ist, das auf einer Seite des Schlitzes beginnt und auf der anderen Seite endet.

11. Untereinheit nach einem der Ansprüche 1 bis 10, **dadurch gekennzeichnet, daß** die Haltescheibe (70) im Ruhezustand leicht konisch ist und nach dem Anziehen eben ist.

12. Untereinheit nach einem der Ansprüche 1 bis 10, **dadurch gekennzeichnet, daß** die Haltescheibe (70) im Ruhezustand eben ist und nach dem Anziehen leicht konisch ist, wobei die Vorderseite (35) des Hohlzylinders (34) leicht konisch ist.

13. Untereinheit nach einem der Ansprüche 1 bis 12, **dadurch gekennzeichnet, daß** die Haltescheibe (70) mindestens eine Öffnung (74) für das Einsetzen eines Stellwerkzeugs (90) aufweist.

14. Untereinheit nach einem der Ansprüche 1 bis 13, **dadurch gekennzeichnet, daß** die in Kontakt befindlichen Flächen der Teile zur Erhöhung des von der Auflagefläche des Hohlzylinders (34) auf die Nabe (40) übertragenen Antriebsmoments so behandelt sind, daß die Reibung erhöht ist.

15. Welle und Untereinheit, wobei die Welle am Ende mit einer Kupplungsvorrichtung ausgerüstet ist, die Teil dieser Untereinheit bildet, **dadurch gekennzeichnet, daß** die Untereinheit gemäß einem der Ansprüche 1 bis 14 ausgeführt ist, wobei die Nabe (40) der Kupplungsvorrichtung in einer vorbestimmten Winkelstellung gegen Drehung bezüglich der Welle (21) blockiert ist.

16. Welle und Untereinheit nach Anspruch 15, **dadurch gekennzeichnet, daß** die axiale Blockierung der Nabe (40) durch eine Auflagefläche (25) der Welle (21) bewirkt wird, die mit Nuten versehen ist, die die Nuten (51) der Welle (21) verlängern und die mit entsprechenden Nuten der Nabe (40) zusammenwirken, die in derselben Weise ihre Nuten (52) verlängern.

17. Welle und Untereinheit nach einem der Ansprüche 15 oder 16, **dadurch gekennzeichnet, daß** die Untereinheit ein Mitnehmer (28) eines Scheibenwischerarms ist, wobei dieser Mitnehmer den Hohlzylinder (34) umfaßt.
